(19) Europäisches Patentamt / European Patent Office / Office européen des brevets

(11) **EP 4 376 333 A1**

(12) **EUROPEAN PATENT APPLICATION**

(43) Date of publication:
**29.05.2024 Bulletin 2024/22**

(21) Application number: **23176005.9**

(22) Date of filing: **30.05.2023**

(51) International Patent Classification (IPC):
**H04K 1/02** $^{(2006.01)}$      **H04L 9/06** $^{(2006.01)}$

(52) Cooperative Patent Classification (CPC):
**H04K 1/02; H04L 9/06;** H04L 2209/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.11.2022 EP 22209986**

(71) Applicants:
• **Deutsche Telekom AG**
  **53113 Bonn (DE)**
• **Technische Universität München**
  **80333 München (DE)**

(72) Inventors:
• **Geitz, Marc**
  **58089 Hagen (DE)**

• **HOLSCHKE, Oliver**
  **10969 Berlin (DE)**
• **BOCHE, Holger**
  **10318 Berlin (DE)**
• **WIESE, Moritz**
  **80807 München (DE)**
• **MÖNICH, Ullrich**
  **81369 München (DE)**
• **TORRES FIGUEROA, Luis Angel**
  **80804 München (DE)**

(74) Representative: **Braun-Dullaeus Pannen Emmerling**
**Patent- & Rechtsanwaltspartnerschaft mbB**
**Platz der Ideen 2**
**40476 Düsseldorf (DE)**

(54) **TECHNIQUES FOR ENHANCING SECURITY IN COMMUNICATIONS SYSTEMS**

(57) The invention disclosed a Security module SMs of a sending unit for providing a security level in data communication, wherein the security module SMs is configured to receive a message $m$ as input data and configured to transform it to a communication signal x comprising the message m, wherein the security module SMs comprises an encryption-based security module $SM_{S,\,enc}$ and an PLS-based security module $SM_{S,\,PLS}$, wherein
• the encryption-based security module $SM_{S,\,enc}$ encrypts the message by using a key, and

• the PLS-based security module $SM_{S,\,PLS}$ comprises an artificial-noise-generating component configured to add artificial noise of a level $N_{Art}$ according to a function $f^1$ to the message so that
o after a transmission of the communication signal x over a communication channel T with a noise level $N_T$ to a receiver that transforms the communication signal x to the communication signal y, the message remains readable to the receiver.

Fig. 2

EP 4 376 333 A1

**Description**

The invention relates to technology agnostic techniques for realizing multidimensional security measures in communication systems. In particular, the invention relates to security modules, a communication terminal, a communication system, a method and to a signal for realizing multidimensional security measures in communications Systems.

As post-quantum cryptography (PQC) gradually supersedes its classical counterpart, it will play a key role in securing future communications. However, there is still a need of technical solutions in case PQC becomes ever compromised.

In principle, PQC can be compared to a classical encryption method. However, PQC is based on very sophisticated mathematical algorithms so that it is being assumed that even quantum computing will not be able to break the codes and to decrypt messages that have been encrypted by PQC methods. However, there is no real proof that PCQ cannot be decrypted by an attacker. Additionally, PQC requires a large computational overhead that can also result in large latency values regarding the data communication.

A physical mechanism to securely exchange keys between two remote parties is Quantum Key Distribution (QKD). QKD introduces, however, some draw-backs. Namely, it is not necessarily an end-to-end (E2E) solution, it requires the introduction of trusted network nodes due to the distance limitation of the quantum channel, and it requires measures for the initial authentication prior to the QKD process. QKD relies on the security of a symmetric encryption scheme to make use of the distributed encryption keys. QKD requires also a separate hardware installation (dedicated dark fiber and QKD servers at its end points) and must therefore be seen as not scalable and expensive solution.

To understand the following, we briefly explain about noise in electromagnetic signals: In electronics, noise is an unwanted disturbance in an electrical signal. Noise generated by electronic devices varies greatly as it is produced by several different effects. Electronic noise is a common component of noise in signal processing. Noise can also happen to electromagnetic signals while the electromagnetic signals travel over a communication channel, the level of the noise depends on the respective technical characteristics of the communication channel. To make messages readable for receivers, error correction due to noise, like FEC (Forward error correction) - that is known to the person skilled in the art - can be applied.

Forward error correction (FEC) is a process of adding redundant data such as an error-correcting code (ECC) to a message so that it can be recovered by a receiver even when no more than a certain number of errors (up to the capability of the code being used) are introduced, either during the process of transmission or on storage. Since the receiver does not have to ask the sender for retransmission of the data, a backchannel is not required in forward error correction. Typically, error-correcting codes are used in lower-layer communication such as cellular network, high-speed fiber-optic communication and Wi-Fi, as well as for reliable storage in media such as flash memory, hard disk and RAM.

In information theory, the technical and/or mathematical treatment of eavesdropping scenario can be done using the wiretap channel as described in "A. D. Wyner, "The wire-tap channel," The Bell System Technical Journal, vol. 54, no. 8, pp. 1355-1387, Oct. 1975". In this model, two legitimate partners are represented by "Alice" and "Bob", who communicate over a noisy channel T with a noise level NT, while the eavesdropper "Eve" intercepts the transmissions through a different noisier channel E, with a noise level NE that is larger than the noise level NT.

Alice's aim here is to fulfill two main goals. First, to ensure reliability in the communication to Bob by decreasing the likelihood of the channel corrupting the transmitted information, thus keeping the probability of decoding error at Bob low. And second, to enforce secrecy by constraining the information leakage to potential eavesdroppers, aiming to keep the statistical correlation between the transmitted message m and the channel output at Eve z as low as possible.

Current solutions assure reliability and secrecy jointly as described in "M. Bloch, M. Hayashi, and A. Thangaraj, "Error-Control Coding for Physical-Layer Secrecy," Proceedings of the IEEE, vol. 103, no. 10, pp. 1725-1746, Oct. 2015", which only provides a rigid and non-flexible solutions that is hard to implement into existing communication infrastructure.

Although wiretap code constructions have been reported in the literature, most of them do not fulfill the requirements set by a security metric as strong as information theoretic semantic security.

If a communication scheme satisfies information-theoretic semantic security, then the eavesdropper can apply any operation to the observations made on its channel output and still will only obtain negligible information about the transmitted message. These operations are not bound to being implementable on any type of computer, let alone of being computable in finite time. In contrast to this, cryptographic semantic security only considers eavesdroppers who are computationally bounded, i.e., the operations which they can perform are limited to being implementable on a computer and to produce an output in reasonable (polynomial) time.

There is a lack of flexible secure architecture that employs existing FECs, and offers a scalable and trustworthy solution that is future-proof. On the contrary, existing approaches for ensuring IT-PLS (information theoretic physical security) involve a redesign of the physical layer of the protocol stack. The code design proposed in US 8 667 380 B2 is one such example, where security and robustness in the communication in terms of error correction codes are jointly designed. The main disadvantage of such approaches is that they do not allow the integration with current standardized technologies, making their integration with widely-deployed systems prohibitive since it demands major architectural changes in well-established technologies.

Initial situation with physical layer security: Physical Layer Security (PLS) is considered to be semantically or information-theoretically secure, provided that the assumption of the best possible signal quality is fulfilled. The attacker must not have a better signal-to-noise ratio (S/R) at his receiving unit than previously modelled. If this assumption is not the case, the attacker can extract information from the signal. The use of PLS thus requires accurate modelling about the transmitters and antenna systems, realistic assumptions about the ability of an attacker to pick up information-bearing signals in an environment to be protected. A modelling error would potentially result in the leakage or extraction of information. On the other hand, if the model assumptions regarding the maximum signal-to-noise ratio to be achieved are too strict, this has a direct influence on the amount of information that can be transmitted.

Recommendation of the security authorities (BSI, NIST): National security authorities recommend a combination of PQC (Post Quantum Cryptography) and classical cryptography in digital communication. The advantage of a combination of PQC and classical cryptographic methods is increased security with simultaneous backwards compatibility and is therefore a very practical solution.

Problem of the recommendation of the security authorities: The national security authorities propose for the defense against future attacks on the communication networks only complexity-based cryptographic methods. This creates only a "one-dimensional" defense.

It is therefore the task of the invention to provide techniques which at least partially eliminate the disadvantages of the prior art and to provide techniques to efficiently enhance security of telecommunication systems.

This object is solved by the features of the independent claims.

The features of the various aspects of the invention described below or the various examples of implementation may be combined with each other, unless this is explicitly excluded or is technically impossible.

According to a first aspect of the invention, a security module SMs for providing a security level in data communication is disclosed, wherein the security module SMs is configured to receive a message m as input data and configured to transform it to a communication signal x comprising the message m, wherein the security module SMs comprises an encryption-based security module SMs, $_{enc}$ and an PLS-based security module SMs, $_{PLS}$, wherein

- the encryption-based security module SMs, $_{enc}$ encrypts the message by using a key, and

  ○ the encryption can be done by using a commonly known encryption algorithm $A^{-1}$ and by sharing the appropriate keys between the sending unit and the receiving unit in advance; the encryption transforms the message to an encrypted message that can be named C, so that the encryption functionality can be described as $C = A^{-1}(m, key)$;
  ○ in particular, PQC encryption functionalities are used;

- the PLS-based security module SMs, $_{PLS}$ comprises an artificial-noise-generating component configured to add artificial noise of a level $N_{Art}$ according to a function $f^{-1}$ to the message so that

  ○ after a transmission of the communication signal x over a communication channel T with a noise level $N_T$ to a receiver that transforms the communication signal x to the communication signal y, the message remains readable to the receiver.

    ▪ this adding of the artificial noise can be described as $x = f^{-1}(C)$;
    ▪ the communication signal x has been transformed to the signal y because of the noise $N_T$ of the communication channel. Within the context of this invention, we also refer to a communication path, wherein communication path and communication channel are technically identical. A communication channel can be realized as a wireless communication channel (e.g. cellular channel like 3G, 4G, 5G, 6G or W-LAN) or a fixed line channel (e.g. xDSL, etc.). It is also possible that the communication channel is a mix of a wireless communication terminal and fixed line communication channel. The properties of the respective communication channel determines its noise level N. In general, a fixed line communication channel has less noise than a wireless line communication channel and a communication channel with the shorter distance has less noise than a communication channel with longer distance;
    ▪ the receiver of y can apply $f(y)$, which is the inverse function of $f^{-1}$, in order to make the message readable again. In the following, $f$ and $f^{-1}$ are referred to security functions or artificial-noise-generating functions; to distinguish that the receiver gained m from $f(y)$ it can also be specified as $\hat{m}$;
    ▪ in an embodiment, the artificial-noise-generating component can be realized as a PLS component, in particular as an IT-PLS component - in this case, the functions $f$ and $f^{-1}$ can also be described as PLS functions or IT-PLS functions;
    ▪ in general, all the functions described in the invention can be implemented as a computer program on a processor of the various security modules described or on a processor of a sending unit, receiving unit or a server comprising a security module;

▪ after a transmission of the communication signal x over a communication channel E with a noise level $N_E$ larger than $N_T$ to an eavesdropper that transforms the communication signal x to the communication signal z, the message can get unreadable to the eavesdropper if $N_E$ is sufficiently high - however to guarantee this kind of semantic security has the downside that the actual payload that can be transmitted in a data stream is being lowered because the data stream also comprises data bits that correspond to the artificial noise $N_{Art}$;

▪ in particular, the artificial noise is only known to the artificial-noise-generating component and can be generated in a randomized fashion; the artificial noise can insert bits of useless information into the message m. Due to the noisier channel $N_E$, this can result in so many bit errors to the communication signal z so that any bit error correction method of a receiving terminal of the eavesdropper would result in so many possible "original" messages that it is in principle not possible that the eavesdropper gains any information about the true message m. When perfect semantic security holds, every one of the possible "original" messages has the same likelihood being the original message m;

- this can be illustrated by the following example: an error correction scheme shall be able to correct one bit out of a 3 bit message: The message is only the following 1 bit message: "1", but 2 more bits of artificial noise are added by $f^{-1}$ that yields: "001"
- Bob's channel has the noise rate NT that only causes 1 bit error. A possible message Bob receives is "101". Since the error correction scheme can correct one bit, Bob corrects "101" to "001" and then applies f to get the true message "1";
- Eve's channel has the noise rate NE that can cause 3 bit error. A possible message Eve receives is "110". Since the error correction scheme can only correct one bit, Eve gets many possible "original" messages. For example, if the first bit was successfully corrected, then Eve gets the following possible "original" messages: 1) "000", 2) "001", 3)"010", and 4) "001". However, Eve has no information, which of the 4 results is the right one. Even this illustrative schema, that does not cover the whole complexity of $N_{Art}$, shows how fast it gets impossible for Eve to gain the true original message m;

▪ the communication signal z is different from y because the communication channels T and E have different noise levels. The value of $N_{Art}$ can be sufficiently high that even if the eavesdropper applies $f(z)$, he cannot obtain a readable version of m but something else that does, in the ideal case, not reveal any information of m. The artificial noise level $N_{Art}$ degenerates in combination with the noise level $N_E$ the communication signal so much that $f(z) = m$ does not work. In such a case, the eavesdroppers are allowed to do everything, i.e. also to apply transformations, without being able to obtain the original message;

▪ the operations of the encryption-based security module SMs, $_{enc}$ and the PLS-based security module SMs, $_{PLS}$ are commutative in a mathematical sense so that they can be applied in principal in any order; the person skilled in the art knows how to adapt the terms like $C = A^{-1}(m, key)$ if the order of applying the modules is being changed;

This provides the technical effect that the inventive method provides a multidimensional, in particular a two dimensional, security system that combines the advantages of different data security approaches in a synergetic way.

If cryptography fails then physical layer security protects the digital communication system against an attacker who has arbitrarily high computing capacity.

On the other hand, if PLS fails then cryptography protects a digital communication against an attacker who is equipped with the best antennas and reception equipment - or in other words in the case that $N_E$ is not sufficiently high so that the message z gets readable for the eavesdropper.

If both methods are combined and applied to a physical channel, the result is a security system that is based on two disjoint factors that is superior in its security properties compared to a purely cryptographic solution or PLS solution. It is a further advantage of the invention that due to the lower level of added artificial noise, more payload data can be transmitted in the data stream and that due to the lower level of encryption, computational overhead is being reduced that results in lower latency that can be especially beneficial for real-time systems. What could such an approach mean? If we restrict $N_{Art}$, then we hedge against "standard Eve" whose channel is not too good. 2) If Eve has a better channel than standard, encryption can still be helpful. 3) If Eve's channel is better than standard, there will generally still be some "residual security" left over from PLS, which might not be sufficient on its own.

The encryption using cryptography methods can be described as follows, in particular in the embodiment of the PQC encryption method: The PQC method can also be used on the physical channel. A common cryptographic key is negotiated before or during data transmission between the sending or receiving unit via a PQ TLS protocol or similar and this is then used for a symmetrical encryption procedure. The encrypted messages $C = A^{-1}(m, key)$ are then sent from the sending unit to the receiving unit and decrypted again on the receiving side by $m = A (C, key)$. The function A here can either be the standardised AES encryption with 256bit keys or a symmetric stream cipher such as ChaCha20. To facilitate a symmetrical AES-256 encryption on physical channel, encryptors the termination points, that can be the sending unit or the receiving unit, exchange by using PQC cryptography a common key. Possible PQC algorithms are KEM-algorithms (Kyber, NTRU) and for authentication SIG-algorithms (Falcon, Rainbow) can be used. It is also possible to use a set of public and private keys.

Alternatively, PQC encryption algorithms can be used directly to encrypt the data traffic, but this requires a sacrifice in performance has to be made.

In an embodiment, the encryption-based security module SMs, $_{enc}$ is arranged logically before the PLS-based security module SMs, $_{PLS}$. Hence, the process can be described as follows: i) encryption operation: $C = A^{-1}(m, key)$ of the sending unit; ii) PLS coding: $x = f^1(C)$ of the sending unit; iii) transmission of the signal x over the noisy channel T: x->y ; iv) PLS-decoding: $C = f (y)$ of the receiving unit v) decryption operation: m = $A(C, key)$ of the receiving unit;

This provides advantages that computational resources are safe and latency is minimized because the PLS-based security module SMs, $_{PLS}$ adds further bits to the data stream that would also have to be encrypted if the PLS-based security module SMs, $_{PLS}$ would be arranged before the encryption-based security module SMs, $_{enc}$. Since the added artificial noise comprises anyway useless information, there is no benefit in encrypting these $N_{Art}$ parts of the message.

In an embodiment, the encryption-based security module SMs, $_{enc}$ is configured to use symmetric or asymmetric keys. In particular, the keys can be exchanged between the sending unit and the receiving unit via a logically and/or physical independent channel. Key exchange for AES encryption can be secured using PQC KEM (Key Encapsulation Mechanism) and SIG (Signature) algorithms. The exchange rate of the cryptographic keys is preferred to be fast enough to be able to typically 1 terabit of data transfer per second to be able to exchange the AES key.

In an embodiment, the encryption-based security module SMs, $_{enc}$ is being implemented as a hardware solution. In the meantime, there are implementations for AES encryptors existing that enable hardware-based AES encryption with the aid of PQC, e.g. FSC 3000 Connect-Guard Optical Encryption from Adva. These cards encrypt the traffic of optical networks up to data rates of 400 Gbit/second with minimal additional latency. The implementation in a hardware application, i.e. a plug-in card in an FSC 3000 unit, can be realised in a modular way.

This provides the advantage of further reducing the latency of the data communication.

In an embodiment, the security module SMs operates with an adjustable working point to secure the message, wherein the working point is a function of the encryption level of the encryption-based security module SMs, $_{enc}$ and of the artificial noise of a level $N_{Art}$ of the PLS-based security module SMs, $_{PLS}$, i.e. WP=WP (encryption level, $N_{Art}$). In particular, the same working point WP can be realized by using different combinations of encryption level (= EL) and $N_{Art}$ so that WP($EL_2$, $N_{Art,1}$) = WP($EL_1$, $N_{Art,2}$) can be true, wherein $EL_2$ is higher than $EL_1$ and $N_{Art,2}$ is higher than $N_{Art,1}$. Hence, it would follow WP($EL_2$, $N_{Art,2}$) > WP($EL_2$, $N_{Art,1}$) > WP($EL_1$, $N_{Art,1}$). It can be stated that identically working points have the same overall level of security but can result in different computational effort and/or QoS values. For example, since $EL_2$ requires more computational effort, WP($EL_1$, $N_{Art,2}$) will result in better latency values than WP($EL_2$, $N_{Art,1}$); and since $N_{Art,2}$ reduces the amount of payload data within the data stream, WP($EL_2$, $N_{Art,1}$) can result in a higher bandwidth than WP($EL_1$, $N_{Art,2}$).

Hence, setting the working points in a flexible way according to security and/or QoS demands provides a great advantage to tailor the security mechanisms according to the needs of the user and/or an application.

In an embodiment, the working point WP can be adapted during the runtime of a single application.

This provides the advantage that an application can have different security and/or QoS requirements during runtime and that when optimal working point can be provided for those different cases.

In an embodiment, the security module SMs adjusts the working point due to information about a communication path T between the sending unit and a receiving unit. Typically, the mobile devices in a mobile network regularly test their signal quality and interact dynamically with the cell's scheduler. This happens within the framework of protocols that are supposed to guarantee quality of service. Adaptive Managed Latency would be one such buzzword here. The QoS receiver is regularly assigned the number of resource blocks so that the corresponding service can run with the booked QoS. Hence, this information can be used for the adjusting.

This provides the advantage that the value of the added artificial noise $N_{Art}$ can dynamically be adjusted based on the actual properties of the communication path T between the sending unit and a receiving unit. The security module can receive this information from the network operator, by extracting data from dedicated network protocols and/or by exchanging dedicated test messages between the sending unit and the receiving unit, wherein those dedicated test messages are configured so that properties about the communication path T can be obtained. Hence, in an embodiment, the security module SMs is configured to send dedicated test messages to the receiving unit to assesses a Noise $N_T$ of the communication path T. The test messages have the advantage that they do not comprise any valuable or security relevant information of the user and/or of the application.

In an embodiment, the security module SMs adjusts the working point due to QoS requirements of an application running on the sending unit or running on the receiving unit and/or according settings set by the user.

This provides the advantage, that the working point and therefore the performance of the security mechanisms can be adapted flexibly to different needs. For example, a banking application will in general require a more secure communication than a video streaming service. Other applications require low latency communication, for example tele-operated driving communications.

In an embodiment, the security module SMs is configured to send dedicated test messages with different Working Points and/or different parameters of the same working point to the receiving unit to assesses a latency and/or QoS values of the data transfer.

This provides the advantage, that it can be checked by actual measurements if required latency and/or QoS values can be met with a certain combination of the parameters of the working point. Those parameters can be varied until an optimal working point is reached.

In an embodiment, the security module SMs comprises a channel coding component, wherein the channel coding component is configured to protect the message m against errors of the communication signal x that occur during transmission over the communication channel T with a noise level $N_T$. This channel coding component can be a known forward error correction (FEC) functionality. Hence, the process can be described as follows: i) encryption operation: $C = A^{-1}(m, key)$ of the sending unit; ii) PLS coding: $v = f^{-1}(C)$ of the sending unit; iii) FEC functionality $v \to x$ of the sending unit; iv) transmission of the signal x over the noisy channel T: $x \to y$; v) FEC functionality $y \to v$ of the receiving unit; vi) PLS-decoding: $C = f(v)$ of the receiving unit v) decryption operation: $m = A(C, key)$ of the receiving unit;

The forward error correction (FEC) functionality provides the advantage that bit errors that occur during the transmission can be corrected. Without the forward error correction (FEC) functionality, $f(y) = C$ would only work in cases, in cases the noise level $N_T$ is very low, whereas the added artificial noise makes the reconstruction of m for the eavesdropper even harder.

The sending unit and/or the receiving entity can be in principle any technical unit that creates messages and sends communication signals, for example a server, a smart phone, tablet, a computer, an IoT-device, and etc.

The security module SMs can comprise a first interface $I_{SMS,1}$ configured to receive the message m as input data and a second interface $I_{SMS,2}$ configured to send a signal that shows the added artificial noise of the level $N_{Art}$ and is being encrypted.

The invention provides as a further advantage that the security module SMs can be implemented alone and/or in addition to existing encryption methods. In contrast to existing encryption methods, the proposed solution has reduced computational overhead, which has also the result that it is applicable in real time communication systems because it only has a minimal effect on latency.

This provides the further advantage that the solution is technology-agnostic and can be implemented basically in any architecture that uses communication signals, wherein the communication signals can travel over the channels with different noise levels.

The solution, in particular the security module SMs, can be implemented in a modular way into existing systems, in particular into existing sending units. This provides the advantage that existing communication terminals, i.e. sending units and/or receiving units, can easily be updated to provide additional security. The modular approach also enables easy implementation into new systems. It is also possible to implement the security module SMs into the OSI layer architecture in a way that it does not effect other already existing functionalities of the different OSI layers.

One of the main advantages of the present invention lies in the re-usability of existing and widely investigated error correction codes in the proposed future-proof architecture, thus not requiring the re-design of the physical layer. Furthermore, by using such a modular scheme, the integration of the security function is flexible and can be realized either in the physical or in the data link layer of the OSI model as will be explained in the following. The fact that the artificial-noise-generating component and the channel coding component are independent from each other and therefore provide a modular scheme that has a very high level of flexibility allows to upgrade existing and legacy systems to offer information-theoretic security assurances via a simple over-the-air software or firmware update. In particular, the design of additional processing blocks responsible for the IT-PLS encoder and the IT-PLS decoder is flexible and can be implemented using various algorithms.

In an embodiment, the security module SMs is implemented within the data layer or the physical layer of the OSI protocol stack, in particular wherein the encryption-based security module, the PLS-based security module and/or the FEC channel coding component are implemented in the same layer or in different layers.

This flexibility provides the advantage that the implementation can be tailored to already existing solutions and can be optimized in view of if the performance outcome is better if that security module SMs is being implemented in the data layer or the physical layer. And implementation in a data layer also provides the advantage that the solution can be realized by a virtual security module SMs that provides pure software solution, in particular such virtual security modules SMs can be used as functionality within a 5G communication network.

In an embodiment, $N_{Art}$ is adjustable and/or the functions $f$ or $f^{-1}$ are adjustable. In particular the artificial-noise-generating component is configured to receive $N_{Art}$ values and/or the $f$ as input and to implemented accordingly in a dedicated procedure. $N_{Art}$ can be adjustable due to specific service requirements, specific application requirements and/or communication channel properties. The artificial-noise-generating component is the PLS-based security module SMs, $_{PLS}$.

The functions $f(y)$ or $f^{-1}(m)$, which can in particular be IT-PLS functions, can be provided in a library and selected based on specific security and/or performance requirements. This provides the advantage that functions can be tailored optimally to a specific use case. The choice of a certain security functions $f(y)$ or $f^{-1}(m)$ that can be implemented is advantageously not restricted to the explicit code constructions for the security component of the wiretap code scheme presented in this document. Since those different functions can have different features and offer different levels of overhead, they can be flexibly deployed depending on the latency, overhead, energy consumption restrictions and other constraints in a given scenario.

The flexibility in the level of the noise $N_{Art}$ provides the advantage that $N_{Art}$ can be tailored to the properties of the respective communication path E to provide an optimized outcome with respect to robustness and security of the communication signal x or that $N_{Art}$ can be adapted due to the needs of the application and/or the user. The channel coding component adapts itself in order that the bit errors introduced by the channel T can be corrected by Bob's channel coding component, which is in particular a FEC.

Information about the communication channel T can be used to adjust the channel coding component and/or to adjust $N_{Art}$. This can be done by estimating a noise level if distinct knowledge about the physical properties of the communication path T. For example, if it is known that the communication signal x travels at first 3 km via the fixed DSL connection and then 300 m via a 5G cellular network to the receiving entity. Another possibility is that the sending entity and the receiving entity exchange well-defined test messages, wherein the security module SMs can determine the noise level from those test messages. In general, the more the test messages are degraded, the higher is the noise level $N_T$ of the communication path T.

The flexibility of adjusting different levels of noise $N_{Art}$ and/or choosing different security functions f also provides the advantage that they can be chosen with respect to certain requirements of services and/or applications that create the message m. For example, a service or an application that is related to a banking transfer has in general higher security demands than non-confidential message service.

In an embodiment, an appropriate seed S is used within the function $x = f^{-1}(C,S)$ to create a different kind of artificial noise $N_{Art}$, in particular to randomize $N_{Art}$. The seed is a sequence of random numbers. The artificial noise $N_{Art}$ can be different because of the randomized "nature" of S. The sending unit can choose seeds that will fill the function $m = f_s(y,S)$ freely. In this case, the receiving entity uses the security function $f_s(y,S)$ to obtain the message m, wherein throughout this text y comprises m. The seed S can be a public seed S and/or can be a re-usable seed S. The seed can be generated and made known to the sending unit and the receiving unit. This can be realized through joint random experiments (e.g. using quantum mechanical effects, QKD) or by observing a common random source (e.g. a satellite). However, it can also be done as described in a coincidence occurring in the network can be used. Or simply send random numbers through the network during periods of low network utilization and hold them at the endpoints.

The seed S needed in this embodiment has a bit sequence or any other information means that is generated randomly and exchanged between communication parties before the receiving entity applies $f_s(y,S)$. Having full knowledge of the employed public seed, nonetheless, does not provide the eavesdropper with any advantage to crack the communication if full sematic security is being provided, which depends on $N_E$.

According to a second aspect of the invention, a security module $SM_R$ of a receiving unit for receiving a communication signal y and to extract the message m from the signal y, wherein the security module $SM_R$ comprises

- an artificial-noise-removing component configured to remove artificial noise of a level $N_{Art}$ caused by a function $f^{-1}$ by applying a function $f$;
- an decryption component configured to decrypt the signal y by using a key; and wherein the original message is obtained after the signal is being processed by the artificial-noise-removing component and the decryption component.

This provides the advantage, that the security module $SM_R$ is capable of processing messages that have been secured by a multidimensional, in particular two dimensional, security approaches.

All the other features described above within the context of the security module SMs that are not in technical contradiction with the functionality of the security module $SM_R$ can also be applied to the security module $SM_R$. In particular, if the seed approach is being used, the artificial-noise-removing component applies $f_s(y,S)$ to extract the original message m from the communication signal y.

The security module $SM_R$ can also comprise a channel de-coding component, that corresponds to the channel decoding complement of the receiving unit, that is configured to correct bit-errors, in particular by applying FEC means, of a communication signal x that was transformed to the communication signal y by traveling over a communication path T. The channel de-coding component ensures that the communication signal y is being corrected from bit-errors to become the communication signal $\hat{v}$, which serves than as the input for the functions $f_s(\hat{v},S)$ or $f(\hat{v})$ to obtain the original message m. Therefore, it is beneficial if the channel de-coding component is being arranged in front of the artificial-noise-removing component in a data stream in-going direction.

According to a third aspect of the invention, a communication terminal is disclosed comprising the Security module $SM_S$ and/or the Security module $SM_R$. This provides the advantage that the communication terminal can be the sending unit and/or the receiving unit and is capable of using multidimensional, in particular two dimensional, security measures.

According to a fourth aspect of the invention, a method for providing a security level in data communication is disclosed, comprising the following steps:

- receiving a message m as input data;
- encrypt the message by using a using a key and
- adding artificial noise of a level $N_{Art}$ according to a function $f^1$ to the message so that

  ○ after a transmission of the communication signal x over a communication channel T with a noise level $N_T$ to a receiver that transforms the communication signal x to the communication signal y, the message remains readable to the receiver;

- optionally: coding the message to protect the message m against errors of the communication signal x that occur during transmission over the communication channel T with a noise level $N_T$.

In an embodiment, $N_{Art}$ is being determined by estimating the noise level $N_E$ of a communication channel E and/or the noise level $N_T$ of the communication channel T by measuring properties of the communication channel E and/or T and/or extracting channel properties from test messages, in particular from well-defined test messages, between the sending unit and the receiving unit.

In an embodiment, a network operator of the communication channel T sets the parameters of the working point because it has knowledge about the infrastructure of the communication channel, which basically means that he has knowledge how the communication channel is being set up technically so that the network operator is especially suited to estimate the noise level $N_T$.

According to a fifths aspect of the invention, a secure communication signal x is being disclosed that is obtainable by the inventive method described above.

In the following, preferred implementation examples of the present invention are explained with reference to the accompanying figure:

Fig. 1: shows the mapping of a message $m_i$ to a bit string $v_{ib}$;

Fig. 2: shows a schematically overview of a wiretap scenario;

Fig. 3: shows a schematically of a secure communication between and inventive sending unit and an inventive receiving unit;

Fig. 4a, b: show an integration of the security module $SM_S$ of Fig. 3 in a protocol stack;

Fig. 5a: shows a service and/or app-oriented implementation of the $SM_S$ and/or the $SM_R$ at the data layer;

Fig. 5b: shows a service and/or app-oriented implementation of the $SM_S$ and/or the $SM_R$ at the physical layer;

Fig. 6: a communication system according to the invention.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

The term semantic security exists in the fields of information-theory and cryptography. To make things even clearer, we briefly discuss the differences and similarities of the term semantic security in both fields:

Both information theory and cryptography define "semantic security", but it is important to note that these are distinct concepts. We apply the information-theoretic meaning in our document.

A communication scheme for a wiretap channel satisfies information-theoretic semantic security if the eavesdropper is unable to infer any information about the transmitted message from his knowledge and observations irrespective of the probability distribution of the messages. The independence of the message distribution is what characterizes semantic security and what distinguishes semantic security from weaker types of security, where security is required only on average with respect to an assumed probability distribution of the messages, whether this be the "true" one or otherwise. (The probability distribution of the messages could be described as the "type" of message. For instance, a text from a newspaper encoded in binary letters will likely have a different distribution than binary control messages for a wireless channel.)

Whether or not information-theoretic semantic security is satisfied can be measured mathematically by various methods. There are authors who call a specific such method "semantic security".

If a communication scheme satisfies information-theoretic semantic security, then the eavesdropper can apply any operation to his observations and still will not obtain any information about the transmitted message. These operations are not bound to being implementable on any type of computer, let alone of being computable in finite time. In contrast to this, cryptographic semantic security only considers eavesdroppers who are computationally bounded, i.e., the operations which they can perform are limited to being implementable on a computer and to produce an output in reasonable time.

Before presenting the technical integration of semantic security into technical components of terminals, communication systems, etc. the theoretical background shall be discussed briefly. At this point it is stated that it can have a technical effect on the outcome of semantic security which theoretical functions are implemented and how these theoretical functions are implemented.

An overview of existing metrics for measuring information-theoretic security are given next for the sake of completeness and in order to place the metric used by the proposed architecture in context.

Probability of Error:

The most straightforward approach for evaluating the likelihood of the eavesdropper to extract the original message out of its channel output consists in using the same decoders employed at the legitimate receiver and measuring the decoding error probability. Since the eavesdropper is assumed to have knowledge on the architecture details used, it is also assumed to have access to such decoders. However, bit or block error rates (BER, BLER) do not faithfully characterize the statistical independence between the sent message and the channel output at the eavesdropper. Such lack of trustworthiness can deceive the security assurance level of a system, therefore this metric is not suitable for evaluating the information-theoretic security level in the system.

Weak Secrecy measures the normalized mutual information between the sent message M and the channel output at Eve after n observations $Z^n$, as defined by

$$\frac{1}{n}I(M; Z^n). \quad (1)$$

However, this metric has been proven unreliable and therefore it is also not a trustworthy way to measure information-theoretic security.

Strong Secrecy is a stronger notion of security, where the total information leakage is quantified by the mutual information between the message M and the $n$ observation of the channel output $Z^n$,

$$I(M; Z^n). \quad (2)$$

This metric, nonetheless, assumes that the eavesdropper's a priori knowledge is restricted to the true message distribution, making it weaker than the concept of semantic security that will be discussed next. Therefore, strong secrecy will not be used as a security assurance metric in the proposed architecture.

The concept of semantic security was first introduced in "M. Bellare, S. Tessaro, and A. Vardy, "Semantic Security for the Wire-tap Channel," in Advances in Cryptology - CRYPTO 2012, ser. Lecture Notes in Computer Science, R. Safavi-Naini and R. Canetti, Eds. Berlin, Heidelberg: Springer, 2012, pp. 294-311" and it is the strongest information-theoretic metric known today. In formal terms, semantic security information leakage is defined as the maximization over any arbitrary message distribution $P_M$ of the mutual information between the originally sent message, M, and the corresponding n observations of the channel outputs at the eavesdropper's end, $Z^n$, carrying such message.

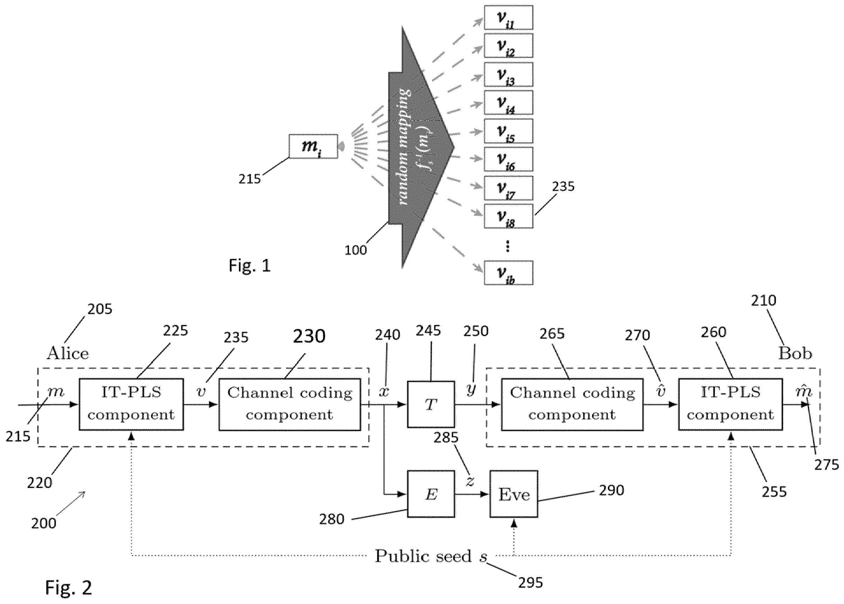

For a wiretap code based on a preferred modular scheme, a public seed $s \in S$ can be used that introduces randomness in the security functions, e.g. IT-PLS encoding function at the IT-PLS component 225 of the proposed architecture when mapping the message m 215 to the bit string v 235, as graphically depicted in Fig. 1.

Fig. 1 shows that the secure message m$_i$ 215 is mapped to a bit string v$_{ib}$ according to an encoding security function $f_S^{-1}$ 100. The index i indicates that any of the b bit string belongs to i-th secure message. The number of possible bit strings b varies according to the coding rate used by the channel coding component depending on the channel conditions to Bob.

Thereby, since the distribution of Z$^n$ also depends on the seed, S, assuming that the message M was sent, the mutual information is then given by

$$\max_{P_M} I(M; Z^n, S). \qquad (3)$$

As the code word length n increases, the information leakage to the eavesdropper converges to zero, thus asymptotically achieving perfect secrecy, wherein the code word length $n$ is related to the seed S.

Since semantic security provides provable security assurance, it is suitable for future-proofing communication systems. Furthermore, semantic security can be defined based on metrics that have an operational meaning and thereby that can be experimentally measured. Because of these reasons, the architecture can employ security functions in the IT-PLS component 225 that exclusively ensure information-theoretic semantic security.

Wiretap code constructions that use the seeded modular coding scheme and ensure information-theoretic semantic security are based on functions that introduce a level of noise that is optimized with respect to the following goal: the noise added on the message shall not trespass a certain level so that Bob is still capable of reading the message while the noise added to the message shall be enough combined with the noisier path to Eve, so that Eve will not be able to read the message. The technical functionality that adds this noise to the message can be described as being an "artificial-noise-generating function" because in contrast to the noise introduced by the communication path, it is not inherent to the physical properties of the communication path. As this artificial-noise-generating-function enhances the security of the message it can also called "security function".

The statistical difference in the channel outputs y 250 to Bob and z 285 to Eve is exploited to provide message confidentiality by embedding information-theoretic security in the communication system. A security layer, e.g. the security module SMs 220 of Fig. 2, at the transmitter end according to the invention can perform this task by mapping the secure message to a code word according to a randomized encoding function, $f_S^{-1}$ 100, as depicted in Fig. 1. At the receiver end, the decoding function fs performs the demapping to the originally transmitted secure message with the help of the seed "S". However, if the noise level of the channel output z to Eve is high enough, even by using the seed "S", Eve will not be able to decode the message appropriately.

Examples of explicit code constructions of security functions 100, also named artificial-noise-generating functions, $\left(f_S^{-1}, f_s\right)$ that can ensure semantic security for arbitrary channels and can be used according to the invention have been found within the following disclosures that are thereby fully incorporated in the invention: M. Hayashi and R. Matsumoto, "Secure Multiplex Coding With Dependent and Non-Uniform Multiple Messages," IEEE Transactions on Information Theory, vol. 62, no. 5, pp. 2355-2409, May 2016; and M. Wiese and H. Boche, "Mosaics of combinatorial designs for information-theoretic security," Designs, Codes and Cryptography, vol. 90, no. 3, pp. 593-632, Mar. 2022.

In a special embodiment, the security function functionality can be described as follows:

Accordingly, semantic security can be achieved with a positive rate by employing a universal hash function (UHF) in the security component of the modular coding scheme for wiretap channels. Under this scheme, the seed $s = (a, t)$ consists of two components a and $t$, which represent each a binary sequence of length $l$. Additionally, the first component of the seed, a, must not be a sequence containing exclusively zeros. Given a binary message m of length k that shall be securely transmitted by Alice, the security function $f_S^{-1}$ that performs a mapping $f_S^{-1} : \{0,1\}^k \times \{0,1\}^{l-k} \to \{0,1\}^l$ to the bit string $v$ that is defined as

$$v = f_S^{-1}(m, r) = a^{-1} * (\mathrm{m}||\mathrm{r}) \oplus \mathrm{t} \ , \quad (4)$$

where $r \in \{0,1\}^{l-k}$ is a binary uniform random vector of length $l - k$, $k < l$, generated by the transmitter and not communicated to any other party. The operations $*$, $(\cdot)^{-1}$, and $\oplus$ represent the multiplication, inverse, and addition in the Galois field $GF(2^l)$, while $||$ denotes concatenation of binary sequences.

At the receiver end, the IT-PLS decoder receives the output of the coding layer $\hat{v}$ and decodes the binary

message $\hat{m}$ by employing the decoding function $f_s: \{0,1\}^l \rightarrow \{0,1\}^k$, defined as

$$\hat{m} = f_s(\hat{v}) = [(a * \hat{v}) \oplus t]_k , \qquad (5)$$

where the operation $[\cdot]_k$ denotes the extraction of the first $k$ bits, while the remaining bits are disregarded.

The existence of a second family of code constructions using biregular irreducible functions (BRI) was demonstrated in Semantic Security via Seeded Modular Coding Schemes and Ramanujan Graphs," IEEE Transactions on Information Theory, vol. 67, no. 1, pp. 52-80, 2021 using graph theory. Explicit code constructs are given in M. Wiese and H. Boche, "Mosaics of combinatorial designs for information-theoretic security," Designs, Codes and Cryptography, vol. 90, no. 3, pp. 593-632, Mar. 2022, where four functional forms of mosaics of combinatorial designs with different color rate ranges are proposed based on algebraic operations. These functions operate using the seed as described before, but have the advantage of introducing less overhead by requiring a shorter seed in certain scenarios, when compared with the functions described before.

Fig. 2 shows a schematic overview of a wiretap scenario 200.

A user Alice can use a sending unit 205, like a smart phone 205 or any other communication terminal 205, to send a message to the receiving terminal 210 of a user Bob. The sending unit 205 generates a message m 215, wherein the message m 215 is being transmitted to a security module SM$_S$ 220. The security module SM$_S$ 220 comprises an artificial-noise-generating component 225, in particular a IT-PLS component 225, and can additionally comprise a channel coding component 230, in particular with a FEC functionality. The artificial-noise-generating component 225 and the channel coding component 230 can be arranged in a modular way independently from each other and work as follows: the message m 215 is an input for an artificial-noise-generating component 220 and is processed by the artificial-noise-generating component 220 to become an output of the artificial-noise-generating component that is labeled as communication signal v 235, wherein the artificial-noise-generating component 220 adds artificial noise of a level N$_{Art}$ to the message m 215 according to the security function $v = f^{-1}(m)$. Then, the communication signal v 235 is an input of the channel coding component 230 and is processed by the channel coding component 230 to become an output that is called communication signal x 240 by adding redundancy information that can be used to correct the signal by the receiving unit 210.

The communication signal x 240 can then be transmitted by sending means of the sending unit 205 over the communication channel T 245 with a noise level N$_T$ that transforms the communication signal x 240 to the communication signal y 250. The communication signal y 250 is being received by the receiving unit 210 of Bob and is an input of a security module SM$_R$ 255 of the receiving unit 210. The security module SM$_R$ 255 comprises an artificial-noise-removing component 260, which can be a IT-PLS component 260, and can comprise a channel coding component 265. The artificial-noise-removing component 260 and the channel coding component 265 can be arranged in a modular way independently from each other and work as follows: The communication signal y 250 is an input of the channel coding component 265 that corrects bit-errors of the communication signal y 250, which has been introduced by traveling over the communication channel T 245 with a noise level N$_T$. This transforms the communication signal y 250 to the communication signal $\hat{v}$ 270. $\hat{v}$ 270 is the input of the artificial-noise-removing component 260 that applies the security function $\hat{m} = f(\hat{v})$, wherein $\hat{m}$ 275 corresponds to the original message m 215. Hence, Bob is able to read the original message m 215.

By sending the communication signal x 240, the communication signal x 240 is in general not only restricted to travel over the communication channel T 245. For example, if the communication signal x 240 is a wireless communication signal it travels into many directions in parallel that corresponds to many different communication channels. In particular, the communication signal x 240 can travel over the communication channel E 280 that has a noise level N$_E$ that is larger than the noise level N$_T$. If the added artificial noise N$_{Art}$ was set appropriately this leads to the effect that traveling over the noiser communication channel E transforms the communication signal x 240 to a communication signal z 285 that shows so much random noise that it is not possible to obtain the original message wherein $\hat{m}$ 275 by Eve with her communication terminal 290 - in other words the communication signal z 285 is semantically secure. This can be expressed mathematically as $\hat{m} \neq f(\hat{z})$.

Even more randomness can be generated to the communication signal x 240 if a public seed S 295 is being applied as follows $f_s^{-1}(m, S)$ and $f_s(y, S)$ and shared between Alice and Bob. Even knowing the public seed S 295 does not help Eve to obtain the original message m because of the semantic security.

The communication signals x 240 or v 235 are being characterized as to have an artificially added noise level N$_{Art}$ that is designed so that $\hat{m} = f(\hat{v})$ can be applied if the communication signals x 240 or v 235 travel over a communication channel T with a noise level N$_T$ and that the artificially added noise level N$_{Art}$, i.e. the amount of added useless information, is high enough so that $\hat{m} \neq f(\hat{z})$ can result if the communication signals x 240 or v 235 travel over the noisier communication channel E with a noise level N$_E$.

In an embodiment aspects of Fig. 2 can also be described as follows: If we consider any communication system with any channel code realization, where the channel code performs well, then the proposed architecture employs an additional IT-PLS component 225 that introduces semantic security into the system. Out of this IT-PLS component 225, multiple IT-PLS encoder and IT-PLS decoder 260 implementations are possible. A feature of the proposed system architecture is that by employing the IT-PLS encoder and the IT-PLS decoder, which can be realized using different code constructions, we can achieve semantic security independent of the error correction code and other physical-layer procedures used. The proposed architecture can offer semantic security for different channel conditions. In order to achieve this, it can dynamically adapt the rate of the IT-PLS component 225, $R_{PLS}$, according to a rough estimation of the channel output to the eavesdropper. In contrast to state-of-the-art code constructions, in the proposed architecture design the knowledge of the channel conditions to the eavesdropper must not be necessarily known to the transmitter in order to ensure semantic security. An estimated value, which does not need to be particularly precise, suffices to adapt the secrecy rate accordingly. The IT-PLS component 225 of the proposed architecture can employ a seeded technique. That is, the public seed can be used for assuring semantic security and countering the uncertainty regarding the knowledge of the channel to the eavesdropper. The advantage of using the public seed is that the architecture remains resilient against eavesdropping attacks despite an incomplete knowledge about the eavesdropper's channel conditions.

As already explained above, the method using only semantic security has two downsides. The adding of $N_{Art}$ to the communication signal has the effect that less payload data is being transmitted by the communication signal. In addition, if the noise level $N_E$ is not sufficiently high, then Eve 290 might be capable to read the message m 215.

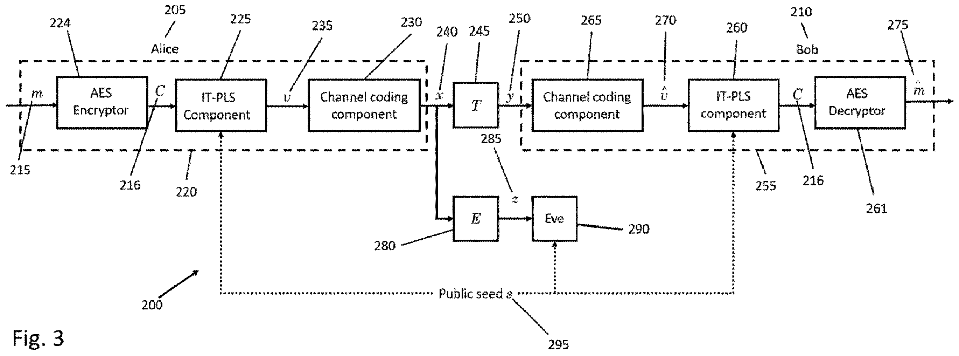

Hence, Fig. 3 shows an adaption of Fig. 2 that introduces multidimensional, in particular two-dimensional, security approaches by also applying data encryption. Just as a clarification, the IT-PLS component 225 of Fig. 2 and Fig. 3 is the PLS-based security module $SM_{S,PLS}$ 225, and the IT-PLS component 260 of Fig. 2 and Fig. 3 is the artificial-noise-removing component $SM_{R,PLS}$ 260, wherein $SM_{R,PLS}$ 260 is configured to remove artificial noise of a level $N_{Art}$. The SMs 220 can comprise an encryption-based security module $SM_{S,enc}$ 224, the PLS-based security module $SM_{S,PLS}$ 225 and/or the coding component 230. The $SM_R$ 255 can comprise an decryption component $SM_{R,dec}$ 224, the artificial-noise-removing component $SM_{R, PLS}$ $SM_{S,PLS}$ 225 and/or the coding component 260.

As can be seen in Fig. 3, the message m 215 is given first to an encryption-based security module $SM_{S,enc}$ 224 that can be on AES encryptor 224 that encrypts the message m 215 using a key and an encryption algorithm $A^{-1}$ to create the message C 216 before the PLS-based security module $SM_{S,PLS}$ 225 is being applied as described in Fig. 2. In the following, the message is being processed and/or the inventive communication signal x 240 is being sent as described in Fig. 2 with the only difference that the receiving unit 210 comprises an decryption component $SM_{R,dec}$ 261 that can be a AES decryptor 261 configured to decrypt the signal by using the key.

This provides the advantage that even if Eve 290 needs to overcome the encryption as well as semantic security to be able to read the message m 215.

Since the operations of the encryption-based security module SMs,enc 224 and the PLS-based security module $SM_{S,PLS}$ 225 are commutative in a mathematical sense, is possible to first apply PLS-based security module $SM_{S,PLS}$ 225 and then the encryption-based security module SMs,enc 224. Of course, the components on the receiving unit 210 need also to be exchanged accordingly.

The usage of the two security approaches that are applied in series after each other can be described as follows, wherein the following embodiment also makes use of the seed approach by using the seed S:

Hence, the process can be described as follows: i) encryption operation: $C = A^{-1}(m, key)$ of the sending unit 205; ii) PLS coding: $v = f^1(C,S)$ of the sending unit 205; iii) FEC functionality $v \rightarrow x$ of the sending unit 205; iv) transmission of the signal x over the noisy channel T: $x \rightarrow y$; v) FEC functionality $y \rightarrow v$ of the receiving unit 210; vi) PLS-decoding: $C = f(v)$ of the receiving unit 210 v) decryption operation: $m = A(C, key)$ of the receiving unit 210;

The security code of the PLS can be customised from setup to setup so that a potential attacker cannot decode the data to be protected. The better the signal at the attacker's end, the greater the influence of the coding on the data rate on the physical channel will be.

The invention can be applied in the following scenarios:

Application in optical networks: Adva FSP3000 with HWAES encryptor / decryptor and FPGA with PLS code before the input or after the output of the Adva system.

Application in mobile networks: PLS could be modularly integrated in the DU (Distributed Unit) before the FEC (Forward Error Correction) coding and QAM (Quadrature Amplitude Modulation) modulation - both to calculate the additional security coding and to decrypt the coding. PQC encryption could also be realised there.

Application in satellite networks: PLS and PQC can be applied in combination before converting the signals to the physical layer.

Potential realisation of the invention: Both security methods, PLS and PQC, can be realised in a hardware (HW) appliance. The HW appliance can be built on FPGA technology and certified. The interfaces would be:

- Incoming data stream, e.g. (fibre, Ethernet) (copper, Ethernet) or any other combination.

- Outgoing data stream, e.g. (fibre, Ethernet), (copper, Ethernet) or any other combination.

- Access to spatially distributed randomness, either this is stored locally in the appliance or it must be imported via an interface, e.g. (copper, Ethernet) or (fibre, Ethernet).

- PQC key exchange via the communication channel between the endpoints. Alternatively, key exchange via a disjoint channel so that the attacker cannot intercept the exchange message at all.

- Management interface, e.g. RS232 or (copper, Ethernet).

Some advantages of the invention disclosure can be summarised as follows:

1. combined layer 1 security of two classically implementable methods to create quantum secure security performance, where the security is based on disjoint mathematical and physical principles.

2. Two factor based security i.e. PQC and PLS. a. Against attackers with infinite computing power. b. Against attackers with good measuring equipment.

3. Modular design: of PLS, i.e. easily implemented on FPGA hardware. Therefore, the proposed solution is also easy to integrate into existing architectures.

4. minimal time delays (latency) of a few percent possible.

5. network agnostic: applicable to all fibre-based, microwave, satellite or cellular networks. Note: for the PLS part, there is a requirement to ensure that the signal to noise ratio (S/R) of a potential attacker is higher than the S/R of the intended receiver.

6. cost-effective: The solution is cost-effective because it can be implemented on existing and standardised hardware. The necessary performance is already achievable.

7. scalable: due to the modular design, the solution is scalable and can be used in parallel.

8. integrable: due to the modular design, the solution can also be integrated into existing endpoints for optical, satellite or mobile networks. Thus, the invention would be immediately usable by manufacturers of the corresponding systems.

Using the proposed architecture it is possible to provide semantic security to future quantum communications among others. For example, the following use cases are possible: Cellular mobile communications (e.g. 3G, 4G, 5G, 6G), Ultra-reliable low-latency communications, Point-to-point communications, Broadcast (point-to-multipoint) communications, Post-Shannon communications, Quantum communications, Vehicular communications, Fiber-optic communications, mmWave communications, Line of sight (LoS) and non-LoS communications, Non-terrestrial communications, Visual light communications, Peer-to-peer networks, Internet of things (IoT) networks, airborne communications, sensor networks, Secure energy-constrained networks, Sensor networks, and/or Industry X.0 networks, etc.

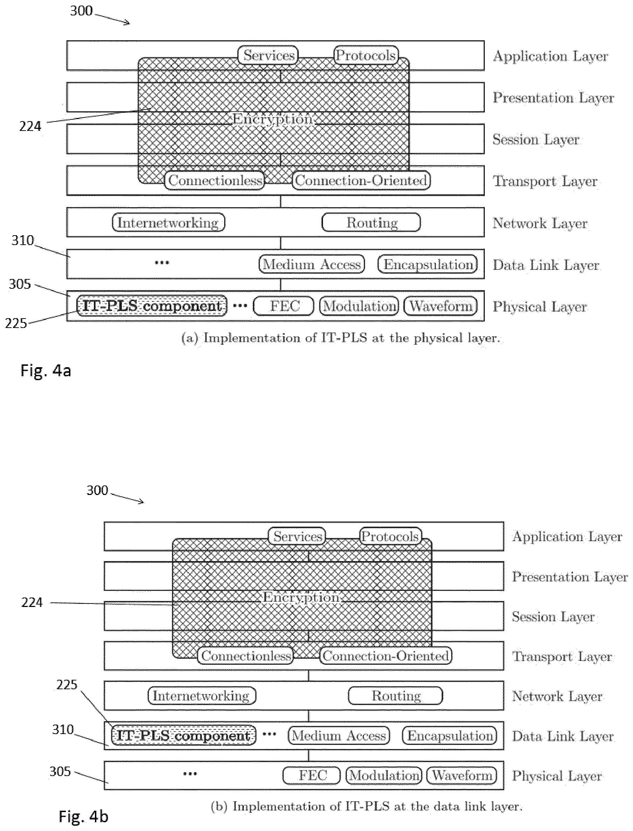

Fig. 4a, b: show an integration of the security module SMS of Fig. 3 in a protocol stack of the sending unit 205.

Since cryptography can take place at the higher layers of the OSI protocol stack 300, as depicted in Fig. 4a,b, the integration of cryptographic algorithms in the embodiment of an encryption-based security module SMs,enc 224 is transparent for the lower layers, where the artificial-noise-generating component, in particular the IT-PLS 225, can be embedded in the system architecture. The architecture design can integrate the IT-PLS 225 component either into the physical layer 305 as shown in Fig. 4a, or into the link data layer 310, as shown in Fig. 4b. The flexible decision where the integration takes place allows to optimize its implementation in new upcoming technologies (in the former case), while remaining flexible for upgrading legacy and existing communication systems via software or firmware updates (in the latter case).

In the case of the receiving unit 310, the IT-PLS 260 can also be integrated either into the physical layer 305 or into the link data layer 310, and this even irrespective of where the IT-PLS 225 is being integrated.

Currently existing optimal channel coding procedures at the physical layer can remain as they are. Such architecture enables the combination of encryption and semantic security as a new feature, which can be integrated either into the data link layer or into the physical layer of the OSI protocol stack 300. A selection of the services offered by each layer of the OSI protocol stack 300 is shown.

The IT-PLS 225 of the sending unit and/or the IT-PLS 260 of the receiving unit 210 can be integrated into existing systems by over-the-air updates that leave the error correction code and other physical-layer procedures responsible of the robustness intact, and just deploying a pre- and post-processing step that implements the security functions, avoiding the need to re-design the lower layers of the protocol stack. Some embodiments for the integration into existing and new systems include, but are not restricted to, fiber end points (e.g., Ciena, Adva devices), network cards, mobile devices and so on.

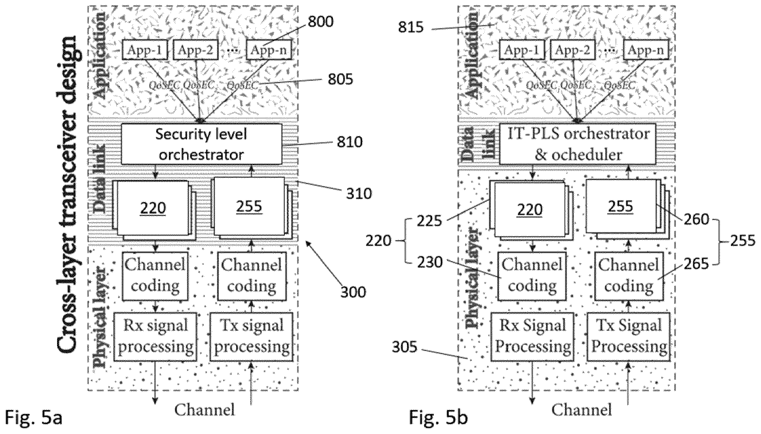

Fig. 5a shows a service and/or app-oriented implementation of the SMs 220 and/or the $SM_R$ 255 at the data layer 310. Fig. 5b shows a service and/or app-oriented implementation of the SMs 220 and/or the $SM_R$ 255 at the physical layer 305.

In the proposed app and service-based architecture, different apps 800 require different QoSECs, which transmitted to a security level orchestrator 810. The lower layers are abstracted from the upper ones by the middleware denominated security level orchestrator 810, that is responsible for interfacing between these layers and enabling the communication between them, so that the services offered by the lower layers can be adapted to the demands of the application layer. This allows to have a configurable system architecture down to the physical layer that fulfills the requirements, in particular QoS and/or security requirements, posed by distinct applications 800 and/or services.

By introducing SMs 220 as an embedded feature of such a service oriented architecture (SOA) that can be adjusted, activated and/or deactivated by an application layer 815, additional protection against eavesdroppers in a post-quantum era can be transparently assured in SOA systems without having an impact on the system's reliability. Further, the latency overhead introduced is negligible as shown in "L. Torres-Figueroa, M. Hörmann, M. Wiese, U. J. Mönich, H. Boche, O. Holschke, and M. Geitz, 'Implementation of Physical Layer Security into 5G NR Systems and E2E Latency Assessment', in submitted to 2022 IEEE Global Communications Conference (GLOBECOM), 2022".

Under this paradigm, the application layer 815 sets the requirements for ensuring a specific QoSEC level and/or security level in the communication using the SMs 220 of the proposed architecture, in particular by setting a working point WP (encryption level, $N_{Art}$) of the SMs 220.

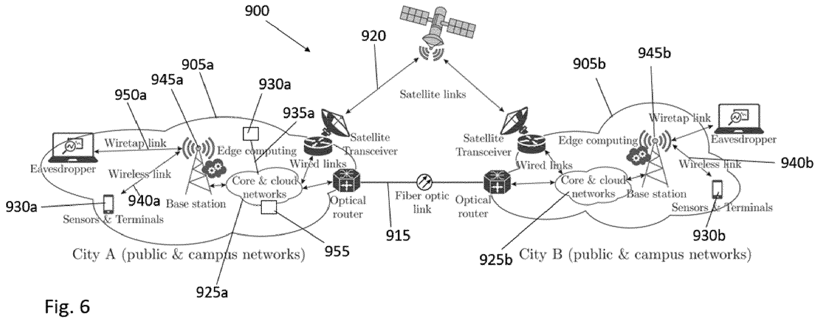

Fig. 6 shows a communication system 900 according to the invention.

Fig. 6 shows a first communication network 905a and a second communication network 905b that can communicate with each other via fiber optic links 915, satellite links 920, and/or cellular communication links. Within each of the communication networks 905a, b there is a core network infrastructure 925a, b, in particular of a telecommunication provider, that provides communication services. User terminals 930a, b (like computers, smart phones, server, IoT devises, etc.) can be connected to the core network infrastructure 925a, b via fixed lines 935a (like XDSL or FTTH) and/or via cellular channels 940a, b (like 4G, 5G. 6G). The wireless cellular channels 940a, b can be the communication channel T 245 of Fig. 2 that is connected via a base station 945a, b to the core network infrastructure 925a, b. The communication channel E 280 of Fig. 2 to the eavesdropper is represented by the wiretap links 950 a, b. In particular, the eavesdropper can also be located within the core networks components.

The user terminals 930a, b are configured to have the security modules SMs 220 and/or $SM_R$ 255. It is also possible that other network units like VMs, Edge VMs, Routers can be provided with the security modules SMs 220 and/or $SM_R$ 255.

Hence, when the terminals 930a, b communicate with each other, their communication is encrypted and semantic secure as described above so that an eavesdropper is not capable of obtaining the secret message m 215.

Fig. 6 additionally shows a security module $SM_{CN}$ 955 that can be located within the core network infrastructure 925a. The security module $SM_{CN}$ 955 can be used as follows. If a user terminal 930 is not able to provide encrypted and semantic secure transmission, for example because its OSI layer has not been updated or semantic security does not work because of some technical reasons for this user terminal, it is possible to connect this legacy user terminal 930 via a secure fixed line to the security module $SM_{CN}$ 955. The user terminal 930 sends its message m 215 to the security module $SM_{CN}$ 955 that takes over the task of providing encrypted and semantic security before forwarding the transformed signal v 235 to the receiver. For this purpose, the security module $SM_{CN}$ 955 comprises the security module SMs 220. If the security module $SM_{CN}$ 955 is a central throughput unit of the core network infrastructure 925a, this provides the advantage that no extra addressing is necessary to guide the message m 215 to the security module $SM_{CN}$ 955.

It is possible that the method also works bidirectionallyand the system is used bidirectionally. The encryption can be symmetrical and f and f^-1 can be exchanged in the PLS functions.

The invention can be applied to the data plane of the data communication and/or to a user plane of the data communication.

## Claims

1. Security module SMs of a sending unit (205) for providing a security level in data communication, wherein the security module SMs (220) is configured to receive a message m (215) as input data and configured to transform it to a communication signal x (240) comprising the message m (215), wherein the security module SMs (220) comprises an encryption-based security module SMs, $_{enc}$ (224) and an PLS-based security module SMs, $_{PLS}$ (225), wherein

    • the encryption-based security module SMs, $_{enc}$ (224) encrypts the message (215) by using a key, and
    • the PLS-based security module SMs, $_{PLS}$ (225) comprises an artificial-noise-generating component configured to add artificial noise of a level $N_{Art}$ according to a function $f^1$ to the message (215) so that

        ∘ after a transmission of the communication signal x (240) over a communication channel T (245) with a noise level $N_T$ to a receiver (210) that transforms the communication signal x (240) to the communication signal y (250), the message remains readable to the receiver (210).

2. The security module SMs of claim 1, wherein the encryption-based security module SMs, $_{enc}$ (224) is arranged logically before the PLS-based security module SMs, $_{PLS}$ (225).

3. The security module SMs of any of the claims, wherein the encryption-based security module SMs, $_{enc}$ (224) is configured to use symmetric or asymmetric keys.

4. The security module SMs of any of the claims, wherein the encryption-based security module SMs, $_{enc}$ (224) is being implemented as a hardware solution.

5. The security module SMs of any of the claims, wherein the security module SMs (220) operates with an adjustable working point to secure the message, wherein the working point is a function of the encryption level of the encryption-based security module SMs, $_{enc}$ and of the artificial noise of a level $N_{Art}$ of the PLS-based security module SMs, $_{PLS}$, i.e. WP=WP (encryption level, $N_{Art}$).

6. The security module SMs of claim 5, wherein the security module SMs (220) adjusts the working point due to information about a communication path T between the sending unit and a receiving unit (210).

7. The security module SMs of claim 6, wherein the security module SMs (220) is configured to send dedicated test messages to the receiving unit to assesses a Noise $N_T$ of the communication path T.

8. The security module SMs of any of the claims 5 to 7, wherein the security module SMs (220) adjusts the working point due to QoS requirements of an application running on the sending unit or running on the receiving unit.

9. The security module SMs of claim 8, wherein the security module SMs (220) is configured to send dedicated test messages with different working points and/or different parameters of the same working point to the receiving unit to assesses a latency of the data transfer.

10. The security module SMs of any of the claims, wherein the security module SMs (220) comprises a channel coding component (230), wherein the channel coding component (230) is configured to protect the message m (215) against errors of the communication signal x (240) that occur during transmission over the communication channel T (245) with a noise level $N_T$.

11. Security module $SM_R$ (255) of a receiving unit for receiving a communication signal y (250) and to extract the message m (215) from the signal y (250), wherein the security module $SM_R$ (255) comprises

    • an artificial-noise-removing component $SM_{R,PLS}$ (260) configured to remove artificial noise of a level $N_{Art}$ caused by a function $f^1$ by applying a function $f$;
    • an decryption component $SM_{R,dec}$ (261) configured to decrypt the signal y by using a key;

wherein the original message is obtained after the signal is being processed by the artificial-noise-removing component and the decryption component.

12. A communication terminal comprising the Security module SMs (220) of claim 1 and/or the Security module $SM_R$ (255) of claim 11.

13. A method for providing a security level in data communication, comprising the following steps:

- receiving a message m (215) as input data;
- encrypt the message by using a using a key and
- adding artificial noise of a level $N_{Art}$ according to a function $f^{-1}$ to the message so that

  ∘ after a transmission of the communication signal x over a communication channel T with a noise level $N_T$ to a receiver that transforms the communication signal x to the communication signal y, the message remains readable to the receiver;

  - optionally: coding the message to protect the message m against errors of the communication signal x that occur during transmission over the communication channel T with a noise level $N_T$.

14. The method of claim 13, wherein $N_{Art}$ is being determined by estimating the noise level $N_E$ of communication channel E and/or the noise level $N_T$ of the communication channel T by measuring properties of the communication channel E and/or T and/or extracting channel properties from test messages, in particular from well-defined test messages, between the sending unit and the receiving unit.

15. Secure communication signal x (240) obtainable by the method according to claim 14.

Fig. 2

Fig. 1

Fig. 3

300

Services  Protocols  Application Layer

Presentation Layer

224  Encryption  Session Layer

Connectionless  Connection-Oriented  Transport Layer

Internetworking  Routing  Network Layer

310
··· Medium Access  Encapsulation  Data Link Layer

305
IT-PLS component ··· FEC  Modulation  Waveform  Physical Layer
225

(a) Implementation of IT-PLS at the physical layer.

**Fig. 4a**

300

Services  Protocols  Application Layer

Presentation Layer

224  Encryption  Session Layer

Connectionless  Connection-Oriented  Transport Layer

225  Internetworking  Routing  Network Layer

310  IT-PLS component ··· Medium Access  Encapsulation  Data Link Layer

305  ··· FEC  Modulation  Waveform  Physical Layer

(b) Implementation of IT-PLS at the data link layer.

**Fig. 4b**

**Cross-layer transceiver design**

Fig. 5a

Application

App-1 | App-2 | ... | App-n   — 800

QoSEC QoSEC ... QoSEC   — 805

Data link

Security level orchestrator   — 810

220   255   — 310

Physical layer

Channel coding   Channel coding

Rx signal processing   Tx signal processing   — 300

Channel

Fig. 5b

815 — Application

App-1 | App-2 | ... | App-n

QoSEC QoSEC ... QoSEC

Data link

IT-PLS orchestrator & ocheduler

225 — 220   255 — 260

220   230 — Channel coding   Channel coding — 265   255

Physical layer

305 — Rx Signal Processing   Tx Signal Processing

Channel

20

Fig. 6

Europäisches
Patentamt

European
Patent Office

Office européen
des brevets

# EUROPEAN SEARCH REPORT

Application Number

EP 23 17 6005

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ERIC KUBISCHTA ET AL: "Semantic Security on Wiretap Channels using Universal Hashing with Fading Applications", ARXIV.ORG, CORNELL UNIVERSITY LIBRARY, 201 OLIN LIBRARY CORNELL UNIVERSITY ITHACA, NY 14853, 21 March 2019 (2019-03-21), XP081156141, * sections I.B, III.A, III.B, III.F; figure 1 * | 1-15 | INV. H04K1/02 H04L9/06 |
| Y | TORRES-FIGUEROA LUIS ET AL: "Experimental Evaluation of a Modular Coding Scheme for Physical Layer Security", 2021 IEEE GLOBAL COMMUNICATIONS CONFERENCE (GLOBECOM), IEEE, 7 December 2021 (2021-12-07), pages 1-6, XP034075221, DOI: 10.1109/GLOBECOM46510.2021.9685785 [retrieved on 2022-01-18] * section II.A; figures 1,2 * | 1-15 | |
| | | | TECHNICAL FIELDS SEARCHED (IPC) |
| Y | DEMIJAN KLINC ET AL: "LDPC Codes for the Gaussian Wiretap Channel", IEEE TRANSACTIONS ON INFORMATION FORENSICS AND SECURITY, IEEE, USA, vol. 6, no. 3, 1 September 2011 (2011-09-01), pages 532-540, XP011349908, ISSN: 1556-6013, DOI: 10.1109/TIFS.2011.2134093 * section V; figure 1 * | 1-15 | H04K H04L |

-/--

The present search report has been drawn up for all claims

| Place of search | Date of completion of the search | Examiner |
|---|---|---|
| Munich | 8 April 2024 | Billet, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

**EUROPEAN SEARCH REPORT**

Application Number

EP 23 17 6005

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MAHDI SHAKIBA-HERFEH ET AL: "Physical Layer Security: Authentication, Integrity and Confidentiality", ARXIV.ORG, CORNELL UNIVERSITY LIBRARY, 201 OLIN LIBRARY CORNELL UNIVERSITY ITHACA, NY 14853, 20 January 2020 (2020-01-20), XP081582371, * section V.B. * | 1-15 | |

TECHNICAL FIELDS
SEARCHED       (IPC)

The present search report has been drawn up for all claims

| Place of search | Date of completion of the search | Examiner |
|---|---|---|
| Munich | 8 April 2024 | Billet, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8667380 B2

**Non-patent literature cited in the description**

- **A. D. WYNER.** The wire-tap channel. *The Bell System Technical Journal,* October 1975, vol. 54 (8), 1355-1387
- **M. BLOCH ; M. HAYASHI ; A. THANGARAJ.** Error-Control Coding for Physical-Layer Secrecy. *Proceedings of the IEEE,* October 2015, vol. 103 (10), 1725-1746
- Semantic Security for the Wire-tap Channel. **M. BELLARE ; S. TESSARO ; A. VARDY.** Advances in Cryptology - CRYPTO 2012, ser. Lecture Notes in Computer Science. Springer, 2012, 294-311
- **M. HAYASHI ; R. MATSUMOTO.** Secure Multiplex Coding With Dependent and Non-Uniform Multiple Messages. *IEEE Transactions on Information Theory,* May 2016, vol. 62 (5), 2355-2409

- **M. WIESE ; H. BOCHE.** Mosaics of combinatorial designs for information-theoretic security. *Designs, Codes and Cryptography,* March 2022, vol. 90 (3), 593-632
- Semantic Security via Seeded Modular Coding Schemes and Ramanujan Graphs. *IEEE Transactions on Information Theory,* 2021, vol. 67 (1), 52-80
- **L. TORRES-FIGUEROA ; M. HÖRMANN ; M. WIESE ; U. J. MÖNICH ; H. BOCHE ; O. HOLSCHKE ; M. GEITZ.** Implementation of Physical Layer Security into 5G NR Systems and E2E Latency Assessment. *2022 IEEE Global Communications Conference (GLOBECOM),* 2022